# FASCICULE DE BREVET EUROPEEN

(11) **EP 0 852 548 B1**
(45) Date de publication et mention de la délivrance du brevet: **16.05.2001**
(21) Numéro de dépôt: 96926449.8
(22) Date de dépôt: 23.07.1996
(51) Int. Cl.: B60T 11/20

(54) **MAITRE-CYLINDRE A REGLAGE SIMPLIFIE**
HAUPTZYLINDER MIT VEREINFACHTER EINSTELLUNG
MASTER CYLINDER WITH SIMPLIFIED ADJUSTMENT

(30) Priorité: 27.09.1995 FR 9511303
(43) Date de publication de la demande: 15.07.1998
(73) Titulaire: Bosch Systemes de Freinage, 93700 Drancy (FR)
(72) Inventeur: SACRISTAN, Fernando Bosch Systèmes de Freinage, F-93700 Drancy (FR)
(74) Mandataire: Bentz, Jean-Paul
(86) Numéro de dépôt international: FR9601159
(87) Numéro de publication internationale: WO9711870

(56) Documents cités:
- FR-A- 2 312 399
- FR-A- 2 361 258

## Description

La présente invention concerne un maître-cylindre tandem hydraulique comprenant : un corps percé d'un alésage au moins partiellement cylindrique dont une première extrémité forme une ouverture, et dont une seconde extrémité est fermée par un fond constitué par une pièce rapportée, cet alésage comportant deux canaux de réalimentation séparés l'un de l'autre par une distance déterminée; des pistons primaire et secondaire susceptibles de coulisser dans l'alésage, le piston primaire étant relié à une tige de commande traversant l'ouverture, et les pistons primaire et secondaire présentant, ensemble, un encombrement utile déterminé; une chambre de pression primaire définie, dans l'alésage, entre les pistons primaire et secondaire, cette chambre renfermant au moins un premier ressort qui est confiné dans un espace de longueur maximale déterminée et qui exerce entre les pistons une première force élastique qui tend à les écarter l'un de l'autre; une chambre de pression secondaire définie, dans l'alésage, entre le piston secondaire et le fond, cette chambre renfermant au moins un second ressort exerçant entre le piston secondaire et le fond une seconde force élastique dans un sens qui tend à écarter ce piston secondaire du fond; des premier et second joints d'étanchéité, coopérant respectivement avec les pistons primaire et secondaire, pour assurer respectivement une étanchéité des chambres de pression primaire et secondaire; au moins un moyen de guidage de la tige de commande, prévu du côté de l'ouverture; et des moyens de réglage accessibles du côté de la seconde extrémité du corps, pour permettre de régler l'un par rapport à l'autre la distance déterminée et l'encombrement utile déterminé.

Un maître-cylindre de ce type est par exemple décrit dans le document FR-A-2 312 399.

L'une des difficultés à surmonter dans la fabrication des maîtres-cylindres tandem est de parvenir à en réduire à la fois le coût et l'encombrement, ces deux impératifs ayant pour l'homme de l'art un caractère antinomique dans la mesure où les solutions actuellement connues pour garantir une réduction d'encombrement en longueur obligent à réaliser le maître-cylindre tandem, notamment en vue de son réglage, en un grand nombre de pièces, donc à un coût supérieur.

La présente invention a pour but de proposer un maître-cylindre tandem dont à la fois l'encombrement et le coût de fabrication, notamment le coût de réglage, sont simultanément réduits.

A cette fin, le maître-cylindre tandem de l'invention est essentiellement caractérisé en ce que le premier ressort est retenu à l'intérieur d'une cage qui constitue l'espace de longueur maximale déterminée, en ce que la cage comprend une coupelle rigide dont une partie périphérique offre un appui au premier ressort du côté du piston primaire et dont une partie centrale est retenue par un arrêtoir, en ce que l'arrêtoir est solidaire d'une première extrémité d'une entretoise qui traverse la coupelle à coulissement et dont une seconde extrémité est vissée dans le piston secondaire, et en ce que les moyens de réglage sont accessibles depuis la chambre de pression secondaire et coopèrent avec l'entretoise pour permettre un réglage de la longueur déterminée de la cage par déplacement relatif de l'entretoise et du piston secondaire.

En outre, selon le mode de réalisation préféré de l'invention, l'alésage présente un diamètre qui se rétrécit par paliers depuis le fond de cet alésage jusqu'à son ouverture, le premier joint est porté par le piston primaire tandis que le second joint est logé dans l'alésage, et l'ouverture de l'alésage prend la forme d'un épaulement, qui constitue par lui-même le moyen de guidage de la tige de commande.

L'encombrement du maître-cylindre de l'invention peut encore être réduit en prévoyant qu'un premier des deux canaux de réalimentation débouche dans l'alésage entre l'épaulement de l'alésage et la chambre de pression primaire, et que le piston primaire soit traversé par un clapet anti-retour autorisant un écoulement du premier canal de réalimentation vers la chambre de pression primaire.

Les moyens de réglage comprennent par exemple un taraudage pratiqué dans le piston secondaire et une tête de vis cylindrique filetée, engagée dans le taraudage, l'entretoise étant de forme générale cylindrique et traversant le piston secondaire de façon étanche.

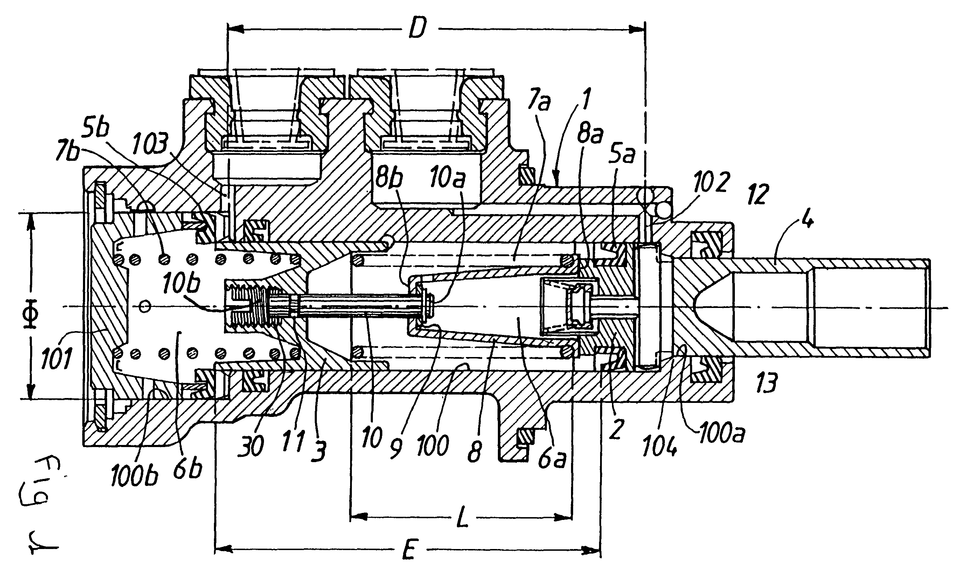

D'autres caractéristiques et avantages de l'invention ressortiront clairement de la description qui en est faite ci-après, à titre indicatif et nullement limitatif, en référence à la figure unique, qui est une vue en coupe d'un maître-cylindre tandem réalisé conformément à l'invention.

Le maître-cylindre tandem de l'invention comprend essentiellement, de façon classique, un corps 1 percé d'un alésage au moins partiellement cylindrique 100, dont une première extrémité 100a forme une ouverture, et dont une seconde extrémité 100b est fermée par un fond 101 constitué par une pièce rapportée.

L'alésage 100 comporte deux canaux de réalimentation en fluide hydraulique, 102 et 103, séparés l'un de l'autre par une distance déterminée D.

Un piston primaire 2 et un piston secondaire 3 sont logés dans l'alésage 100 de manière à pouvoir y coulisser par actionnement d'une tige de commande 4 traversant l'ouverture 100a et susceptible de déplacer le piston primaire 2.

Le piston primaire 2 délimite dans l'alésage 100, grâce à un premier joint d'étanchéité 5a, une chambre de pression primaire 6a dans laquelle est logé au moins un premier ressort 7a.

Le ressort 7a est contraint dans un espace de longueur maximale L, et exerce entre les pistons 2 et 3 une première force élastique qui tend à écarter ces pistons l'un de l'autre.

Le piston secondaire 3 délimite dans l'alésage100, grâce à un second joint d'étanchéité 5b, une chambre de pression secondaire 6b dans laquelle est logé au moins un second ressort 7b exerçant entre le piston secondaire 3 et le fond 101 une seconde force élastique dans un sens qui tend à écarter ce piston secondaire du fond.

Les pistons primaire et secondaire présentent, ensemble, un encombrement utile E.

Selon l'invention, le premier ressort 7a est retenu à l'intérieur d'une cage qui constitue l'espace de longueur maximale L, et des moyens de réglage, accessibles depuis la chambre de pression secondaire 6b, sont prévus pour permettre de régler l'un par rapport à l'autre la distance D qui sépare les canaux de réalimentation 102 et 103 et l'encombrement utile E de l'ensemble des pistons primaire 2 et secondaire 3, grâce à une variation de la longueur L de la cage.

Plus précisément, la cage comprend une coupelle rigide 8 dont une partie périphérique 8a offre un appui au premier ressort 7a et s'appuie elle-même sur le piston primaire 2 sous l'effet de la seconde force élastique exercée par le second ressort 7b.

Une partie centrale 8b de la coupelle 8 est retenue par un arrêtoir 9 solidaire d'une première extrémité 10a d'une entretoise 10 qui traverse la coupelle 8 à coulissement, et dont une seconde extrémité 10b est vissée dans le piston secondaire 3.

Les moyens de réglage, qui coopèrent avec l'entretoise 10 pour permettre un déplacement relatif de cette entretoise et du piston secondaire 3, comprennent par exemple un taraudage 30 pratiqué dans le piston secondaire 3 et une tête de vis cylindrique filetée constituée par la seconde extrémité 10b de l'entretoise, engagée dans le taraudage 30, l'entretoise étant par ailleurs de forme générale cylindrique et traversant le piston secondaire 3 de façon rendue étanche par un joint 11.

Selon une variante possible de réalisation de l'invention, la tête de vis cylindrique filetée lOb et le taraudage 30 pourraient être respectivement remplacés par une tête de vis cylindrique lisse et un simple alésage, en prévoyant que l'arrêtoir 9 soit remplacé par un écrou maintenu en rotation par la coupelle 8, et que l'extrémité 10a de l'entretoise 10 soit filetée pour recevoir cet écrou.

Comme le montre la figure, l'alésage 100 présente un diamètre Φ qui se rétrécit par paliers depuis le fond 101 de cet alésage jusqu'à son ouverture 100a, cette ouverture prenant la forme d'un épaulement 104 pour constituer par elle-même un moyen de guidage de la tige de commande 4.

Un tel arrangement permet de prévoir que le premier joint d'étanchéité 5a soit porté par le piston primaire, et que le second joint d'étanchéité 5b soit logé dans l'alésage, ce qui conduit à un encombrement minimal des pistons.

Enfin, le premier canal de réalimentation 102 débouche dans l'alésage 100 entre l'épaulement 104 de l'alésage et la chambre de pression primaire 6a, et le piston primaire 2 est traversé par un clapet anti-retour 12 autorisant un écoulement de fluide hydraulique depuis le premier canal de réalimentation 102 vers la chambre de pression primaire 6b, ce clapet anti-retour étant actionné par une butée transversale 13 qui traverse la tige 4 et qui s'appuie sur l'épaulement 104 pour ouvrir le clapet anti-retour dans la position de repos du piston primaire 2, telle qu'illustrée sur la figure.

## Revendications

1. Maître-cylindre tandem hydraulique comprenant :
- un corps (1) percé d'un alésage au moins partiellement cylindrique (100) dont une première extrémité (100a) forme une ouverture, et dont une seconde extrémité (100b) est fermée par un fond (101) constitué par une pièce rapportée, cet alésage comportant deux canaux de réalimentation (102, 103) séparés l'un de l'autre par une distance déterminée (D);
- des pistons primaire (2) et secondaire (3) susceptibles de coulisser dans l'alésage (100), le piston primaire étant relié à une tige de commande (4) traversant l'ouverture, et les pistons primaire (2) et secondaire (3) présentant, ensemble, un encombrement utile déterminé (E);
- une chambre de pression primaire (6a) définie, dans l'alésage, entre les pistons primaire et secondaire (2, 3), cette chambre (6a) renfermant au moins un premier ressort (7a) qui est confiné dans un espace de longueur maximale déterminée (L) et qui exerce entre les pistons une première force élastique qui tend à les écarter l'un de l'autre;
- une chambre de pression secondaire (6b) définie, dans l'alésage, entre le piston secondaire (3) et le fond (101), cette chambre (6b) renfermant au moins un second ressort (7b) exerçant entre le piston secondaire et le fond une seconde force élastique dans un sens qui tend à écarter ce piston secondaire du fond ;
- des premier et second joints (5a, 5b) d'étanchéité, coopérant respectivement avec les pistons primaire et secondaire, pour assurer respectivement une étanchéité des chambres de pression primaire et secondaire (6a, 6b);
- au moins un moyen de guidage (104) de la tige de commande, prévu du côté de l'ouverture (100a); et
- des moyens de réglage accessibles du côté de la seconde extrémité du corps, pour permettre de régler l'un par rapport à l'autre la distance déterminée et l'encombrement utile déterminé,
caractérisé en ce que le premier ressort (7a) est retenu à l'intérieur d'une cage qui constitue l'espace de longueur maximale déterminée (L), en ce que la cage comprend une coupelle rigide (8) dont une partie périphérique (8a) offre un appui au premier ressort (7a) du côté du piston primaire (2) et dont une partie centrale (8b) est retenue par un arrêtoir (9), en ce que l'arrêtoir (9) est solidaire d'une première extrémité (10a) d'une entretoise (10) qui traverse la coupelle (8) à coulissement et dont une seconde extrémité (10b) est vissée dans le piston secondaire (3), et en ce que les moyens de réglage sont accessibles depuis la chambre de pression secondaire et coopèrent avec l'entretoise (10) pour permettre un réglage de la longueur maximale déterminée (L) de la cage par déplacement relatif de l'entretoise (10) et du piston secondaire (3).

2. Maître-cylindre suivant la revendication 1, caractérisé en ce que l'alésage (100) présente un diamètre (Φ) qui se rétrécit par paliers depuis le fond (100b) de cet alésage jusqu'à son ouverture (100a), en ce que le premier joint (5a) est porté par le piston primaire (2), en ce que le second joint (5b) est logé dans l'alésage (100), et en ce que l'ouverture (100a) de l'alésage prend la forme d'un épaulement (104), qui constitue par lui-même le moyen de guidage de la tige de commande (4) .

3. Maître-cylindre suivant la revendication 2, caractérisé en ce qu'un premier (102) des deux canaux de réalimentation débouche dans l'alésage entre l'épaulement (104) de l'alésage et la chambre de pression primaire (6a), et en ce que le piston primaire (2) est traversé par un clapet anti-retour (12) autorisant un écoulement du premier canal de réalimentation (102) vers la chambre de pression primaire (6a).

4. Maître-cylindre suivant l'une quelconque des revendications précédentes, caractérisé en ce que les moyens de réglage comprennent un taraudage (30) pratiqué dans le piston secondaire (3) et une tête de vis cylindrique filetée (10b), engagée dans le taraudage, l'entretoise (10) étant de forme générale cylindrique et traversant le piston secondaire (3) de façon étanche.

## Patentansprüche

1. Hydraulischer Tandem-Hauptzylinder mit
- einem Körper (1), der mit einer mindestens teilweise zylindrischen Bohrung (100) durchbrochen ist, deren erstes Ende (100a) eine Öffnung bildet und deren zweites Ende (100b) von einem Boden (101) verschlossen ist, der aus einem angesetzten Teil gebildet ist, wobei diese Bohrung zwei durch einen definierten Abstand (D) voneinander getrennte Nachversorgungskanäle (102, 103) aufweist;
- einem Primär- und einem Sekundärkolben (2, 3), die in der Bohrung (100) verschiebbar sind, wobei der Primärkolben mit einer Steuerstange (4) verbunden ist, die durch die Öffnung hindurchgeht, und der Primär- und der Sekundärkolben (2, 3) gemeinsam eine definierte Nutzabmessung (E) aufweisen;
- einer Primärdruckkammer (6a), die in der Bohrung zwischen dem Primär- und dem Sekundärkolben (2, 3) begrenzt ist, wobei diese Kammer (6a) mindestens eine erste Feder (7a) enthält, die in einem Raum mit einer definierten Maximallänge (L) eingeschlossen ist und zwischen den Kolben eine erste Federkraft ausübt, die sie voneinander zu entfernen sucht;
- einer Sekundärdruckkammer (6b), die in der Bohrung zwischen dem Sekundärkolben (3) und dem Boden (101) begrenzt ist, wobei diese Kammer (6b) mindestens eine zweite Feder (7b) enthält, die zwischen dem Sekundärkolben und dem Boden eine elastische Kraft in eine Richtung ausübt, die diesen Sekundärkolben vom Boden zu entfernen sucht;
- einer ersten und einer zweiten Dichtung (5a, 5b), die jeweils mit dem Primär- bzw. Sekundärkolben zusammenwirkt, um eine jeweilige Abdichtung der Primär- bzw. Sekundärdruckkammer (6a, 6b) zu gewährleisten;
- mindestens einem Mittel zur Führung (104) der Steuerstange, das auf der Seite der Öffnung (100a) vorgesehen ist; und
- Einstellmitteln, die auf der Seite des zweiten Körperendes zugänglich sind, um den definierten Abstand und die definierte Nutzabmessung relativ zueinander einzustellen,
dadurch gekennzeichnet, daß die erste Feder (7a) innerhalb eines Käfigs gehalten ist, der den Raum mit definierter Maximallänge (L) bildet, daß der Käfig einen starren Becher (8) aufweist, von dem ein Umfangsteil (8a) der ersten Feder (7a) primärkolbenseitig (2) eine Anlage bietet und dessen zentraler Teil (8b) von einem Anschlag (9) gehalten ist, daß der Anschlag (9) mit einem ersten Ende (10a) eines Zwischenstücks (10) fest verbunden ist, das durch den Becher (9) gleitend hindurchgeht und dessen zweites Ende (10b) in dem Sekundärkolben (3) eingeschraubt ist, und daß die Einstellmittel von der Sekundärdruckkammer aus zugänglich sind und mit dem Zwischenstück (10) zusammenwirken, um eine Einstellung der definierten Maximallänge (L) des Käfigs durch Relativverschiebung des Zwischenstücks (10) und des Sekundärkolbens zu ermöglichen.

2. Hauptzylinder nach Anspruch 1, dadurch gekennzeichnet, daß die Bohrung (100) einen Durchmesser (Φ) aufweist, der sich stufenartig vom Boden (100b) dieser Bohrung bis zu deren Öffnung (100a) verjüngt, daß der erste Dichtring (5a) vom Primärkolben (2) getragen ist, daß der zweite Dichtring (5b) in der Bohrung (100) gelagert ist und daß die Öffnung (100a) der Bohrung die Form einer Schulter (104) hat, die selbst das Mittel zur Führung der Steuerstange (4) bildet.

3. Hauptzylinder nach Anspruch 2, dadurch gekennzeichnet, daß der erste der beiden Nachversorgungskanäle in die Bohrung zwischen der Schulter (104) der Bohrung und der Primärdruckkammer (6a) mündet und daß ein Rückschlagventil (12) durch den Primärkolben (2) hindurchgeht, das ein Abfließen vom ersten Nachversorgungskanal (102) zur Primärdruckkammer (6a) ermöglicht.

4. Hauptzylinder nach einem der vorangehenden Ansprüche, dadurch gekennzeichnet, daß die Einstellmittel ein im Sekundärkolben ausgebildetes Innengewinde (30) und einen zylindrischen Schraubenkopf mit Außengewinde (10b) aufweisen, der in das Innengewinde eingeschraubt ist, wobei das Zwischenstück (10) eine allgemein zylindrische Form aufweist und durch den Sekundärkolben in dichter Weise hindurchgeht.

## Claims

1. A hydraulic tandem master cylinder comprising :
- a body (1) formed with a bore (100) which is at least partially cylindrical and of which one end (100a) forms an opening and a second end (100b) is closed by a bottom (101) formed by a detachable part, this bore comprising two fluid feed ducts (102, 103) spaced one from the other by a defined distance (D);
- a primary piston (2) and a secondary piston (3) arranged to slide in the bore (100), the primary piston being connected to an actuating rod (4) which passes through the opening, and the primary piston (2) and the secondary piston (3) presenting together a defined effective overall size (E);
- a primary pressure chamber (6a) defined in the bore between the primary and secondary pistons (2, 3), this chamber (6a) containing at least a first spring (7a) which is confined in a space of defined maximal length (L) and which exerts between the pistons a first spring force which urges them apart from each other;
- a secondary pressure chamber (6b) defined in the bore between the secondary piston (3) and the bottom (101), this chamber (6b) containing at least a second spring (7b) which exerts between the secondary piston and the bottom a second spring force in a direction which urges this secondary piston away from the bottom;
- first and second sealing elements (5a, 5b), co-operating respectively with the primary and secondary pistons, to ensure sealing of the primary and secondary pressure chambers (6a, 6b) respectively;
- at least one guide means (104) for the actuating rod, provided adjacent the opening (100a); and
- adjustment means accessible from the vicinity of the second end of the body, to enable adjustment relative to one another of the defined distance and the defined effective overall size,
characterised in that the first spring (7a) is retained within a cage which constitutes the space of defined maximal length (L), in that the cage comprises a rigid cup (8) of which a peripheral part (8a) presents a purchase for the first spring (7a) in the vicinity of the primary piston (2) and of which a central part (8b) is retained by a stop (9), in that the stop (9) is solid with a first end (10a) of a spacer (10) which passes slidingly through the cup (8) and of which a second end (lOb) screwed in the secondary piston (3), and in that the adjustment means are accessible from the secondary pressure chamber and co-operate with the spacer (10) to enable an adjustment of the defined maximal length (L) of the cage by relative displacement of the spacer (10) and of the secondary piston (3).

2. A master cylinder according to claim 1, characterised in that the bore (100) presents a diameter (Ø) which reduces stepwise from the bottom (100b) of this bore until the opening (100a), in that the first seal (5a) is borne by the primary piston (2), in that the second seal (5b) is accommodated in the bore (100), and in that the opening (100a) of the bore takes the form of a shoulder (104), which itself constitutes the guide means for the actuating rod (4).

3. A master cylinder according to claim 2, characterised in that a first one (102) of the two fluid feed ducts opens into the bore between the shoulder (104) of the bore and the primary pressure chamber (6a), and in that the primary piston (2) has a non return valve (12) passing through it which enables flow from the first fluid feed duct (102) into the primary pressure chamber (6a).

4. A master cylinder according to any one of the preceding claims, characterised in that the adjustment means comprises a screw thread (30) formed in the secondary piston (3) and a threaded cylindrical screw head (10b), engaged in the screw thread, the spacer (10) having a generally cylindrical shape and passing sealingly through the secondary piston (3).
